# EUROPÄISCHE PATENTSCHRIFT

(11) **EP 3 478 605 B1**
(45) Veröffentlichungstag und Bekanntmachung des Hinweises auf die Patenterteilung: **05.10.2022**
(21) Anmeldenummer: 17734304.3
(22) Anmeldetag: 30.06.2017
(51) Int. Cl.: B65G 23/08

(54) **MODULARES SYSTEM FÜR MOTORBETRIEBENE FÖRDERROLLEN**
MODULAR SYSTEM FOR MOTOR-OPERATED CONVEYING ROLLERS
SYSTÈME MODULAIRE POUR ROULEAUX DE TRANSPORT À MOTEUR

(30) Priorität: 30.06.2016 DE 102016112051
(43) Veröffentlichungstag der Anmeldung: 08.05.2019
(73) Patentinhaber: Interroll Holding AG, 6592 Sant' Antonino (CH)
(72) Erfinder: VAN HOLTHE TOT ECHTEN, Jurriaen, 6592 Sant' ANTONINO (CH)
(74) Vertreter: Kohlhof, Stephan
(86) Internationale Anmeldenummer: PCT/EP2017/066236
(87) Internationale Veröffentlichungsnummer: WO 2018/002285

(56) Entgegenhaltungen:
- WO-A1-2013/016833
- WO-A1-2015/052631
- WO-A2-2007/087997
- DE-A1-102014 222 171

## Beschreibung

Die Erfindung betrifft ein Modulsystem von motorbetriebenen Förderrollen, umfassend: ein Förderrollenrohr, eine erste Achseinheit, die in ein erstes Ende des Förderrollenrohres eingesetzt ist, eine zweite Achseinheit, die in ein dem ersten Ende gegenüberliegendes zweites Ende des Förderrollenrohres eingesetzt ist, eine erste Lagerungseinheit am ersten Ende und eine zweite Lagerungseinheit am zweiten Ende, um die das Förderrollenrohr um die erste und zweite Achseinheit entsprechend drehbar gelagert ist, einen in dem Förderrollenrohr angeordneten elektrischen Motor, der zwischen die zweite Achseinheit und das Förderrollenrohr mechanisch gekoppelt ist zur Erzeugung eines Drehmoments zwischen dem Förderrollenrohr und der zweiten Achseinheit.

Ein weiterer Aspekt der Erfindung ist eine motorbetriebene Förderrolle, die aus einem solchen Modulsystem hergestellt wurde und ein Verfahren zur Herstellung von motorbetriebenen Förderrollen mittels eines modularen Systems.

Motorbetriebene Förderrollen dieser Art werden für verschiedene Zwecke eingesetzt. Eine zentrale Anwendung solcher motorbetriebenen Förderrollen sind größere und kleinere Logistikeinheiten beziehungsweise Fördervorrichtungen, bei denen solche motorbetriebenen Förderrollen als Elemente von Streckenförderern gemeinsam mit Leerlaufrollen oder angetriebenen Rollen eingesetzt werden, die über Ketten, Riemen oder dergleichen von der motorbetriebenen Förderrolle angetrieben werden, in Rotation versetzt werden. Die Rollen sind hierbei hintereinander angeordnet und bilden eine Förderstrecke. Unter einer motorbetriebenen Förderrolle im Sinne dieser Erfindung ist auch zu verstehen ein sogenannter Trommelmotor, der beispielsweise als Antriebselement für Bandförderer dient und zu diesem Zweck eine höhere Leistungsklasse, gegebenenfalls eine Innenkühlung durch eine Flüssigkeit und eine höhere Belastungsstufe des Getriebes aufweist als motorbetriebene Förderrollen für Rollenförderstrecken.

Motorbetriebene Förderrollen bestehen grundsätzlich aus einem elektrischen Antriebsmotor im Innenraum eines Förderrollenrohrs, der das Förderrollenrohr gegenüber einer Achse in Rotation versetzt. Die Achse wird hierbei typischerweise ortsfest in einem Gestell drehmomentfest gehalten und kann durch zwei einzelne Achsstummel an beiden Enden der Förderrolle oder auch einen durchgehenden Achskörper, der auch mehrteilig sein kann, gebildet werden.

Motorbetriebene Förderrollen sind Produkte, die verschiedenen hohen Anforderungen unterliegen. Gefordert ist eine hohe Laufruhe, um den Geräuschpegel in Fördervorrichtungen, die typischerweise mehrere solcher motorbetriebenen Förderrollen aufweisen, gering zu halten. Gefordert ist weiterhin ein kostengünstiges Fertigungsverfahren, denn es handelt sich um Produkte, die in hoher Stückzahl eingesetzt werden. Gefordert ist weiterhin, dass motorbetriebene Förderrollen in unterschiedlichen Varianten verfügbar sind. So werden für verschiedene Anwendungen auch motorbetriebene Förderrollen mit verschiedenen Längen des Förderrollenrohres benötigt, um an jeweils spezifische Produktabmessungen oder Förderkapazitäten angepasst zu sein. Weiterhin werden an motorbetriebene Förderrollen unterschiedliche Anforderungen hinsichtlich der Drehzahl beziehungsweise Fördergeschwindigkeit und hinsichtlich des Drehmoments gestellt.

Motorbetriebene Förderrollen werden daher für unterschiedliche Zwecke konstruiert. Es sind Förderrollen bekannt, die eine hohe Leistung und eine große Länge aufweisen, um ein der Länge entsprechendes Drehmoment übertragen zu können. Es sind weiterhin Förderrollen bekannt, die eine hohe Drehzahl aufweisen, um hohe Fördergeschwindigkeiten zu erzielen. Grundsätzlich kann ein Benutzer von solchen Förderrollen daher die für ihn geeignete Förderrolle auswählen und einsetzen. Motorbetriebene Förderrollen können zwar grundsätzlich mit einem Direktantrieb ausgerüstet sein, bei dem das vom Elektromotor erzeugte Drehmoment und dessen Drehzahl unmittelbar zwischen einer oder beiden Achseinheiten und dem Förderrollenrohr wirken. Neben diesen getriebelosen Förderrollen werden jedoch hauptsächlich motorbetriebene Förderrollen eingesetzt, die ein ein- oder mehrstufiges Getriebe oder mehrere seriell geschaltete Getriebe als Getriebestufen aufweisen. Bei diesen mit Getriebe ausgerüsteten Förderrollen ist eine Drehmomentübertragung auf die Getriebeingangswelle und aus Getriebeausgangswelle erforderlich und das Drehmoment am Getriebegehäuse ist abzustützen. Hierzu kommen verschiedene Drehmomentabstützungen und -Übertragungen in Betracht. So kann grundsätzlich an einer oder beiden Achseinheiten, am Elektromotor, und am Förderrollenrohr eine Abstützung und Drehmomentübertragung erfolgen. Beispielsweise kann der Rotor des Elektromotors mit der Getriebeingansgwelle gekoppelt sein, die Getriebeausgangswelle mit dem Förderrollenrohr gekoppelt sein, Getriebegehäuse und Stator mit einer, mit jeweils entsprechend einer oder mit beiden Achseinheiten gekoppelt sein und Getriebegehäuse und Stator auch miteinander gekoppelt sein. Als Rotor kann ein Innenläuferrotor oder ein Außenläuferrotor zum Einsatz kommen. Als Getriebe kann ein Stirnradgetriebe, Planetenradgetriebe oder andere Getriebbauformen eingesetzt werden.

So offenbart die DE 10 2014 222 171 A1 ein modulares System für den Aufbau einer Fördereinrichtung gewünschter Länge sowie ein Verfahren zur Herstellung einer solchen Fördereinrichtung. Die Fördereinrichtung weist ein in einer gewünschten Länge herstellbares Trommelrohr mit einem ersten Ende und einem zweiten Ende, eine Antriebskartusche mit einem Kartuschenrohr, welches zur drehmomentfesten Aufnahme in das Trommelrohr ausgebildet ist, und einen Deckel auf. Koaxial innerhalb des Kartuschenrohrs ist eine Antriebseinheit zum Ausüben eines Förderdrehmoments von der ersten Achse auf das Trommelrohr angeordnet. Das Kartuschenrohr weist an einem Ende einen Einsatzdeckel auf, welcher mittels eines Wälzlagers auf einer zweiten Achse drehbar gelagert ist, wobei die zweite Achse an der Stirnseite des Kartuschenrohrs eine Ausnehmung zur drehmomentfesten Aufnahme eines Achsstummels aufweist. Es ist wahlweise ein Trommelrohrdeckel, welcher mittels eines Wälzlagers auf einer dritten Achse drehbar gelagert ist, wobei die dritte Achse zur Durchführung des Achsstummels ausgebildet ist, und wahlweise ein Einsatzelement, welches zur Aufnahme in das Trommelrohr ausgebildet ist und mittels eines Wälzlagers auf einer vierten Achse drehbar gelagert ist, wobei die vierte Achse zur Aufnahme des Achsstummels ausgebildet ist, vorgesehen.

Allerdings bringt diese gewünschte Auswahlmöglichkeit eine Reihe von Nachteilen mit sich. So ist zum einen die Austauschbarkeit von Förderrollen oftmals weder hinsichtlich der geometrischen Abmessungen noch hinsichtlich der Leistungsdaten möglich. Dies erschwert den Ersatz von Förderrollen im Falle eines Defektes und führt in Anwendun-gen, bei denen ein kurzfristiger Ersatz notwendig ist, zu einem erhöhten Aufwand der Vorratshaltung beim Benutzer oder einem Ersatzteillieferanten. Desweiteren erfordert die an die jeweiligen Anforderungen angepasste Gestaltung der Förderrollen eine umfangrei-che Lagerhaltung der einzelnen Komponenten, die in solchen Förderrollen verbaut werden. Schließlich ist die Konstruktionsweise von Förderrollen aufwendig und eine Anpassung an sich ändernde Anforderungen häufig nicht oder nur aufwendig möglich.

Der Erfindung liegt die Aufgabe zugrunde, diese Zielkonflikte aufzulösen und eine motorbetriebene Förderrolle bereitzustellen, die sowohl hinsichtlich ihrer Eigenschaften den typischen Anforderungen gerecht wird als auch einen Ersatz oder eine Reparatur unter Vermeidung umfangreicher Lagerhaltung erlaubt.

Dies wird erreicht, indem ein Modulsystem der zuvor genannten Art als elektrischen Motor
- einen Motor mit einer ersten Bauart, der über eine erste Schnittstelle mit dem Förderrollenrohr und über eine zweite Schnittstelle mit der zweiten Achseinheit gekoppelt ist, und
- einen Motor mit einer von der ersten verschiedenen zweiten Bauart, der über die erste Schnittstelle mit dem Förderrollenrohr und über die zweite Schnittstelle mit der zweiten Achseinheit gekoppelt ist,
umfasst.

Erfindungsgemäß können motorbetriebene Förderrollen unterschiedlicher Bauart hergestellt werden. Hierbei werden die Komponenten der jeweiligen individuellen motorbetriebenen Förderrolle sorgfältig aufeinander abgestimmt und erfüllen insgesamt die gestellten Anforderungen, indem Elektromotor und Getriebe beispielsweise an die in der Fördervorrichtung benötigten Geschwindigkeit und Drehmoment angepasst werden und indem ein Elektromotor hinsichtlich seiner Leistung an die Förderrollenrohrlänge angepasst wird. Dabei ist die erfindungsgemäße Motorrolle aus einem Modulsystem aufgebaut.

Das Modulsystem umfasst hierbei eine erste und eine zweite Achseinheit, die standardisiert ausgeführt sein können, also Schnittstellen zu den anderen Komponenten der motorbetriebenen Förderrolle aufweisen, die einheitlich sind und sich dazu eignen, eine Mehrzahl von Varianten der anderen Komponenten daran anzuschließen. Das Modulsystem weist weiterhin ein Förderrollenrohr auf, das gleichfalls eine standardisierte Schnittstelle beziehungsweise mehrere standardisierte Schnittstellen zu den übrigen Komponenten der motorbetriebenen Förderrolle aufweisen kann. Grundsätzlich ist zu verstehen, dass das Förderrollenrohr selbst bereits in mehreren Varianten im Modulsystem enthalten sein kann, beispielsweise in Varianten, die sich in ihrer Länge unterscheiden oder in Varianten, die sich in ihrer Oberfläche, also der Außenumfangsfläche des Förderrollenrohres, unterscheiden.

Neben diesen Komponenten umfasst das Modulsystem weiterhin Lagerungseinheiten am ersten und zweiten Ende, die typischerweise standardisiert sind. Weiterhin ist ein elektrischer Motor umfasst.

In diesem Modulsystem sind zwei oder mehr verschiedene elektrische Motoren enthalten. Diese Motoren werden mittels übereinstimmender Schnittstellen in die Motorrolle integriert und die solcherart standardisierten Schnittstellen sorgen für die notwendige funktionelle Integration des Motors, also insbesondere die Drehmomentübertragung. Grundsätzlich kann mit dem erfindungsgemäßen Modulsystem eine technisch ausgewogene motorbetriebene Förderrolle, die hinsichtlich ihrer Komponenten zueinander passend abgestimmt ist und eine gewünschte hohe Lebensdauer zuverlässig erreicht aufgebaut werden, ohne dass hierzu ein hinsichtlich der Fertigung und Lagerhaltung hoher Individualisierungsgrad erforderlich ist.

Unter der Bauart ist hierbei die Motorart zu verstehen, also beispielsweise ein bürstenlos kommutierter Motor oder eine Bauart mit Bürstenkommutierung, eine Bauart als Gleichstrommotor oder eine Bauart als Drehstrommotor oder sonstige Bauartvarianten. Das Modulsystem ermöglicht es somit, Förderrollen herzustellen, die als Ersatz für motorbetriebene Förderrollen dienen und dabei die Bauart des elektrischen Motors der zu ersetzenden motorbetriebenen Förderrolle anzupassen und eine Systemkompatibilität sicherzustellen. Weiterhin kann eine Anpassung an nationale oder regionale Standards in leichter Weise und ohne zusätzlichen Fertigungs- und Lagerhaltungsaufwand erfolgen.

Dabei ist es besonders bevorzugt, wenn die erste Bauart ein Synchronmotor und die zweite Bauart ein Asynchronmotor ist, oder die erste Bauart ein Motor mit einer ersten Motorleistung und die zweite Bauart ein Motor einer von der ersten verschiedenen zweiten Motorleistung ist. Gemäß dieser Ausführungsform werden die zwei Bauarten entweder durch einen Synchronmotor einerseits und einen Asynchronmotor andererseits dargestellt und erlauben hiermit eine kostengünstige und lagerhaltungsreduzierende Anpassung der Motorbauart an verschiedene Fördersysteme. Alternativ unterscheiden sich die Motoren der ersten und zweiten Bauart in ihrer Motorleistung, sodass aus dem Modulsystem motorbetriebene Förderrollen mit elektrischen Motoren unterschiedlicher Antriebsleistung kostengünstig und ohne zusätzlichen Lageraufwand hergestellt werden können.

Gemäß einer ersten bevorzugten Ausführungsform ist vorgesehen, dass der elektrische Motor mittels der ersten Schnittstelle mit einem Getriebemodul verbunden ist, welches das Drehmoment des elektrischen Motors untersetzt und über eine dritte Schnittstelle auf das Förderrollenrohr überträgt, wobei das Modulsystem als Getriebemodul ein erstes Getriebe mit einer ersten Untersetzung und ein zweites, von dem ersten verschiedenes Getriebe, das eine von der ersten verschiedene zweite Untersetzung aufweist, umfasst. Gemäß dieser Ausführungsform umfasst das erfindungsgemäße Modulsystem weiterhin ein Getriebemodul, das wahlweise durch ein erstes oder ein zweites Getriebe gebildet sein kann, die sich in ihrer Untersetzung unterscheiden. Jedes dieser Getriebe ist erfindungsgemäß mittels einer dritten Schnittstelle mit dem elektrischen Motor verbunden. Beide bzw. alle Getriebe können mit dieser dritten Schnittstelle direkt verbunden werden, wodurch eine Vereinheitlichung der Anbindung zwischen Elektromotor und Getriebe erzielt wird und somit Vorteile hinsichtlich Montage und Lagerhaltung von Ersatzteilen erzielt werden.

Grundsätzlich ist zu verstehen, dass das erste und zweite Getriebe wiederum solcherart aufgebaut sein können, dass diese koppelbar sind und so eine modulartige Aneinanderreihung der Getriebe erfolgt. Dies bedeutet, dass das Getriebemodul aus mehreren Getrieben zusammengesetzt werden und hierbei durch Schnittstellen an den Getrieben eine Kopplung von einem, zwei, drei oder mehr Getrieben ermöglicht wird. In diesem Fall kann das Getriebemodul beispielsweise durch ein Getriebe mit einer einzigen Getriebestufe und ein zweites Getriebe, das aus zwei Getrieben als zwei Getriebestufen zusammengesetzt ist, ausgebildet sein. Die beiden Getriebe des zweiten Getriebes sind miteinander gekoppelt und bilden zwei Getriebestufen dieses Getriebes, um eine Multiplikation der Untersetzungen der beiden Getriebestufen zu erzielen.

Ein Getriebe des Modulsystems kann einstufig oder mehrstufig wie zwei- oder dreistufig sein. Grundsätzlich kann die Abstützung und Drehmomentkopplung des Getriebes über die entsprechenden Schnittstellen zum Elektromotor, zum Förderrollenrohr oder einem an dem Förderrollenrohr befestigten Bauteil wie einer Endkappe, und/oder zu einer oder beiden Achseinheiten erfolgen, wobei hier eine direkte Kopplung oder eine Kopplung unter Zwischenschaltung von Kopplungselementen erfolgen kann. Getriebeeingang, Getriebeausgang und Getriebeabstützung können im Falle von Planetenradgetrieben wahlweise an Hohlrad, Sonnenrad oder Planetenradträger ausgebildet sein. Die Drehmomentkopplung im Bereich der jeweiligen Schnittstellen kann kraftschlüssig, formschlüssig oder stoffschlüssig oder durch Kombinationen hieraus ausgeführt sein.

Gemäß einer weiteren bevorzugten Ausgestaltung ist hierbei vorgesehen, dass das Modulsystem als Getriebemodul ein erstes Getriebe mit Zahnrädern aus einem ersten Material und ein zweites Getriebe mit Zahnrädern aus einem von dem ersten verschiedenen zweiten Material umfasst. In einigen Einsatzmöglichkeiten von Förderrollen hat sich gezeigt, dass die Möglichkeit, das Getriebe mit Zahnrädern unterschiedlicher Materialien variabel bereitstellen zu können, vorteilhaft ist. Einerseits kann durch eine Auswahl eines kostengünstigeren, wenngleich weniger belastbaren Materials eine Anpassung des Getriebes an Förderrollen mit geringerer Leistung erfolgen und hiermit eine ausreichende Lebensdauer bei geringerer Leistung und reduzierten Fertigungskosten erzielt werden. Zum anderen kann in Anwendungen, in denen eine besonders niedrige Geräuschentwicklung der Förderrolle erforderlich ist, durch Einsatz hieran angepasster Materialien im Getriebe die Geräuschentwicklung reduziert werden. Grundsätzlich ist zu verstehen, dass das erste und zweite Getriebe übereinstimmende Untersetzungen bei zugleich unterschiedlichen Materialien aufweisen können, ebenso aber sich sowohl hinsichtlich der Untersetzung als auch des Materials unterscheiden können.

Gemäß einer weiteren bevorzugten Ausführungsform ist vorgesehen, dass das Modulsystem als Getriebemodul ein erstes Getriebe mit einem Planetengetriebe und ein zweites Getriebe mit einer von dem Planetengetriebe verschiedenen Bauart, insbesondere einem Stirnradgetriebe, umfasst. Gemäß dieser Ausführungsform wird es in dem Modulsystem ermöglicht, über die zweite Schnittstelle zwei Getriebe unterschiedlicher Bauart wahlweise in den Elektromotor anzukoppeln. Hierbei ist unter einer Bauart eines Getriebes die Zahnradanordnung, beziehungsweise der Kraftlinienfluss zu verstehen. Insbesondere kann eine Planetengetriebebauweise einerseits und eine Stirnradgetriebebauweise andererseits eingesetzt werden, es sind aber auch andere Bauformen wie Schneckenradgetriebe oder Kegelradgetriebe in bestimmten Anwendungsfällen einsetzbar.

Über diese Möglichkeiten der modularen Konfiguration von Förderrollen hinaus ist es in vielen Anwendungen wünschenswert, eine Förderrolle weiter zu individualisieren, indem Zusatzfunktionen von dieser Förderrolle erfüllt werden. Solche Zusatzfunktionen können sich aus unterschiedlichen Anforderungen heraus ergeben, beispielsweise kann eine bestimmte sensorische Zusatzfunktion von der motorbetriebenen Förderrolle erwartet werden, oder es kann eine mechanische Zusatzfunktion der individuellen motorbetriebenen Förderrolle, gegebenenfalls als Verbundwirkung innerhalb der gesamten Fördervorrichtung, erwartet werden.

Die Bereitstellung dieser Zusatzfunktionen steht allerdings in einem Zielkonflikt zu der individuellen Abstimmung von motorbetriebenen Förderrollen hinsichtlich deren Auslegung. Durch die hierdurch hervorgerufene Individualisierung wird wiederum sowohl die Herstellung aufwendig als auch die Ersatzteilbevorratung. Dies steht im Zielkonflikt mit der Anforderung, Ersatzteile bereitzuhalten, um diese schnellstmöglich zuliefern zu können, da in logistischen Anwendungen ausfallbedingte Stillstandszeiten einer Fördervorrichtung innerhalb kürzester Zeit behoben werden müssen.

Dieser Nachteil kann überwunden werden, indem das erfindungsgemäße Modulsystem fortgebildet wird durch ein modulares Übertragungselement, welches zwischen den elektrischen Motor und die zweite Achseinheit eingesetzt ist, indem das modulare Übertragungselement mittels der zweiten Schnittstelle mit dem elektrischen Motor und mittels einer vierten Schnittstelle mit der zweiten Achseinheit verbunden ist, und über die zweite und vierte Schnittstelle das Drehmoment zwischen dem elektrischen Motor und der zweiten Achseinheit überträgt, wobei als modulares Übertragungselement
- ein erstes funktionelles Zusatzmodul, welches eine elektromechanische, sensorische oder thermische Funktion bereitstellt, und
- ein zweites funktionelles Zusatzmodul, welches anstelle des ersten funktionellen Zusatzmodul in die Förderrolle eingesetzt werden kann und eine elektromechanische, sensorische oder thermische Funktion bereitstellt, die verschieden ist von der Funktion des ersten funktionellen Zusatzmoduls.

Gemäß dieser Fortbildung wird ein Modulsystem bereitgestellt, aus dem motorbetriebene Förderrollen hergestellt beziehungsweise montiert werden können.

Gemäß dieser Fortbildung ist ein modulares Übertragungselement vorgesehen, das zwischen den elektrischen Motor und die zweite Achseinheit eingesetzt ist. Das modulare Übertragungselement kann einerseits durch ein erstes funktionelles Zusatzmodul gebildet werden. Dieses erste funktionelle Zusatzmodul dient erfindungsgemäß nicht allein dazu, ein Drehmoment zwischen dem elektrischen Motor und der zweiten Achseinheit zu übertragen, sondern stellt eine Zusatzfunktion bereit. Diese Zusatzfunktion kann eine elektromechanische Funktion, eine sensorische Funktion oder eine thermische Funktion sein. Beispielsweise kann das Zusatzmodul dazu dienen, ein Drehmoment sensorisch zu erfassen, eine Drehzahl sensorisch zu erfassen oder einen Drehwinkel sensorisch zu erfassen. Das Zusatzmodul kann weiterhin oder alternativ dazu dienen, Bremsenergie, die beim Verzögern der Rotationsgeschwindigkeit des Förderrollenrohrs auftritt, in elektrische Energie zu wandeln und zwischenzuspeichern oder in ein Versorgungsnetz einzuspeisen, an welches das Zusatzmodul angeschlossen ist. Das Zusatzmodul kann beispielsweise weiterhin oder alternativ dazu dienen, in dem elektrischen Motor oder anderen Bauteilen der Förderrolle erzeugte Wärme abzuleiten, temporär zwischenzuspeichern oder zu wandeln, um hierdurch die Temperatur im Innenraum des Förderrollenrohrs zu verringern oder lokal solcherart zu verlagern, dass die Temperatur an temperaturempfindlichen Komponenten der Förderrolle reduziert wird. Weiterhin ist ein zweites Zusatzmodul im Modulsystem enthalten. Dieses zweite Zusatzmodul kann anstelle des ersten Zusatzmoduls mit der zweiten und vierten Schnittstelle verbunden werden. Erstes und zweites funktionelles Zusatzmodul stellen hierbei unterschiedliche Zusatzfunktionen bereit, sodass das Modulsystem durch Auswahl des ersten oder zweiten funktionellen Zusatzmoduls die Herstelllung von Förderrollen mit unterschiedlichen Zusatzfunktionen ermöglicht, ohne dass hierzu die Montageweise und Anschlussgestaltung für diese Zusatzmodule innerhalb der Förderrolle geändert werden müsste.

Das erfindungsgemäße Modulsystem kann weiterhin fortgebildet werden durch ein drehmomentübertragendes Zwischenstück ohne elektromechanische, sensorische oder thermische Funktion, das anstelle des ersten und zweiten funktionellen Zusatzmoduls mittels der zweiten Schnittstelle mit dem elektrischen Motor und mittels der vierten Schnittstelle mit der zweiten Achseinheit verbunden ist. Dieses drehmomentübertragende Zwischenstück kann als ein Achs- oder Wellenelement ausgeführt sein. Das Zwischenstück dient dazu, ein Drehmoment von der zweiten Achseinheit auf den elektrischen Motor zu übertragen. Dieses Zwischenstück kann hierbei in unterschiedlichen Längenvariationen im Modulsystem enthalten sein, beispielsweise um hierdurch Förderrollen mit unterschiedlichen Förderrollenrohrlängen auszurüsten und entsprechend anzupassen.

Sowohl das drehmomentübertragende Zwischenstück des Modulsystems als auch das erste und das zweite funktionelle Zusatzmodul sind solcherart ausgebildet, dass sie eine übereinstimmende zweite Schnittstelle aufweisen, mit der sie mit dem elektrischen Motor verbunden werden können beziehungsweise sind und eine übereinstimmende vierte Schnittstelle aufweisen, mit der sie mit der zweiten Achseinheit verbunden werden können beziehungsweise sind. Dies bedeutet, dass eine entsprechende zweite Schnittstelle an dem elektrischen Motor beziehungsweise an jeder Variante eines elektrischen Motors innerhalb des Modulsystems ausgebildet ist, die sowohl zum Anschluss an ein drehmomentübertragendes Zwischenstück als auch zum Anschluss an ein erstes funktionelles Zusatzmodul ausgebildet ist und entsprechend eine vierte Schnittstelle an der zweiten Achseinheit vorhanden ist, die entsprechend zur Verbindung mit dem drehmomentübertragenden Zwischenstück und dem ersten funktionellen Zusatzmodul ausgebildet ist. Es ist zu verstehen, dass die Schnittstellen geeignet sind, mit sowohl dem Zwischenstück als auch dem Zusatzmodul verbunden zu werden, wobei Zwischenstück und Zusatzmodul jedoch alternativ zueinander mit der ersten und zweiten Schnittstelle verbunden werden können, das heißt in einer Förderrolle ist entweder das Zwischenstück oder das erste funktionelle Zusatzmodul verbaut. Hierbei ist zu verstehen, dass das erste funktionelle Zusatzmodul auch durch zwei Komponenten gebildet werden kann, beispielsweise durch eine erste Komponente, welche die gewünschte Zusatzfunktion bereitstellt und durch eine zweite Komponente, welche als ein Zusatz-Zwischenstück dient und eine Anpassung des funktionellen Zusatzmoduls an unterschiedliche Förderrollenlängen oder an unterschiedliche Abmessungen von sonstigen Varianten von Komponenten innerhalb des Förderrollenrohres ermöglicht. In diesem Fall sind die beiden Komponenten des funktionellen Zusatzmoduls miteinander verbunden, und eine der beiden Komponenten bildet die erste Schnittstelle aus und die andere Komponente bildet die zweite Schnittstelle aus.

Mit dieser Ausführungsform wird es ermöglicht, in einer kostengünstigen Weise motorbetriebene Förderrollen herzustellen, die eine hohe Variabilität im Hinblick auf Zusatzfunktionen bereitstellen, ohne dass hierdurch die Fertigungskosten und der Aufwand der Lagerhaltung für Ersatzteile dieser Förderrollen erhöht wird. Erfindungsgemäß wird weiterhin eine variable Komponente zwischen zwei definierten Schnittstellen innerhalb eines Förderrollenrohres bereitgestellt, die in einfacher Form es ermöglicht, Förderrollen mit Zusatzfunktion oder ohne Zusatzfunktion herzustellen und gegebenenfalls auch im späteren Gebrauch Zusatzfunktionen nachzurüsten.

Gemäß einer dabei bevorzugten Ausführungsform wird das erfindungsgemäße Modulsystem weitergebildet indem die zweite und die vierte Schnittstelle identisch sind. Grundsätzlich umfasst das erfindungsgemäße Modulsystem ein erstes funktionelles Zusatzmodul und ein zweites funktionelles Zusatzmodul, und gegebenenfalls ein Zwischenstück, die jeweils alternativ als modulares Übertragungselement in die Förderrolle eingesetzt werden können. Durch die bevorzugte übereinstimmende Ausführung der zweiten und vierten Schnittstelle wird einerseits ermöglicht, dass die zweite Achseinheit direkt mit dem elektrischen Motor gekoppelt wird. Hierdurch kann in Anwendungsfällen, in denen kein funktionelles Zusatzmodul verbaut wird, die zweite Achseinheit solcherart bemessen werden, dass sie den nicht genutzten Zwischenraum überbrückt und mit ihrer vierten Schnittstelle direkt an der zweiten Schnittstelle des Motors befestigt werden kann. Zudem ermöglicht diese Fortbildung, dass mehrere funktionelle Zusatzmodule aneinander gekoppelt und in die Motorrolle eingesetzt werden können. Hierdurch können auch mehrere Funktionen modulartig zusammengestellt und über entsprechend einheitliche und identische Schnittstellen in die Motorrolle integriert werden.

Weiterhin können auch durch die zwei funktionellen Zusatzmodule zwei übereinstimmende, sich verstärkende Zusatzfunktionen bereitgestellt werden, beispielsweise indem eine durch ein Zusatzmodul bereitgestellte Bremsfunktion verdoppelt wird, indem ein zweites Zusatzmodul mit der gleichen Funktion eingesetzt wird.

Grundsätzlich ist unter einer Verbindung der Schnittstellen zu verstehen, dass durch diese Verbindung vorzugsweise einerseits ein der Leistung des Elektromotors entsprechendes Drehmoment übertragen werden kann, andererseits bevorzugt zusätzlich eine Positionierung, insbesondere Zentrierung, bereitgestellt wird, welche die notwendige Achsausrichtung der Komponenten der Förderrolle bereitstellt. Unter einer Schnittstelle ist eine Verbindung zwischen zwei Komponenten zu verstehen, die grundsätzlich zwei gestaltete Verbindungsseiten aufweist, die miteinander verbunden werden können. Die zwei gestalteten Verbindungsseiten können hierbei verschieden voneinander sein, jedoch zueinander passen oder können identisch ausgeführt sein. Als Schnittfläche kann beispielsweise eine Flansch-Flanschverbindung, eine Innenumfangs/Außenumfangsverbindung, eine verschraubte Verpressung von zwei Flächen und dergleichen verwirklicht sein. Neben dieser Ausführungsform kann das erfindungsgemäße Modulsystem auch einen Adapter aufweisen, der er ermöglicht, eine erste Schnittstelle des zweiten Zusatzmoduls mit der zweiten Schnittstelle des ersten Zusatzmoduls zu verbinden, indem dieser Adapter zwischen das erste und zweite Zusatzmodul gesetzt wird.

Gemäß einer weiteren bevorzugten Ausführungsform ist vorgesehen, dass das erste oder zweite funktionelle Zusatzmodul als elektromechanische Funktion eine Bremsenergierückgewinnung bereitstellt, indem das erste beziehungsweise zweite funktionelle Zusatzmodul ausgebildet ist, um eine in der Rotation der Förderrolle gespeicherte kinetische Energie in elektrische Energie zu wandeln. Motorbetriebene Förderrollen unterliegen im Gebrauch häufig einander abwechselnden Beschleunigungen und Verzögerungen. Dies verursacht einerseits einen erhöhten Energieverbrauch, andererseits wird hierdurch innerhalb der Förderrolle Verlustwärme erzeugt, die für die Lebensdauer der in der Förderrolle angeordneten Komponenten nachteilig ist. Gemäß dieser Ausführungsform wird daher durch das Zusatzmodul eine Bremsenergierückgewinnung als Funktion bereitgestellt. Bei der Bremsenergierückgewinnung wird die in der motorbetriebenen Förderrolle aufgrund deren Masse und Rotationsgeschwindigkeit gespeicherte Energie im Zuge einer Verzögerung der Rotationsgeschwindigkeit in elektrische Energie gewandelt. Dies kann beispielsweise erfolgen, indem das Zusatzmodul als Generator geschaltet werden kann oder indem das Zusatzmodul eine elektronische Funktion solcherart bereitstellt, dass es durch Kopplung mit dem elektrischen Antriebsmotor der motorbetriebenen Förderrolle den elektrischen Antriebsmotor als Generator betreibbar macht, sobald eine Bremsfunktion der motorbetriebenen Förderrolle eintritt. Neben der kinetischen Energie, die in der motorbetriebenen Förderrolle aufgrund deren Masse und Rotationsgeschwindigkeit selbst gespeichert ist, wird regelmäßig bei einer Bremsung der motorbetriebenen Förderrolle auch kinetische Energie, die in den geförderten Produkten gespeichert ist, über die motorbetriebene Förderrolle gewandelt, indem diese kinetische Energie über den Haftoder Reibungskontakt zu der motorbetriebenen Förderrolle von dem Produkt auf die motorbetriebene Förderrolle übertragen wird. Grundsätzlich ist zu verstehen, dass gerade die Ausgestaltung des Zusatzmoduls als Funktion einer Bremsenergierückgewinnung sich dazu eignet, um alternativ ein Zusatzmodul, zwei Zusatzmodule oder auch mehr als zwei Zusatzmodule in die motorbetriebene Förderrolle einzusetzen, um die motorbetriebene Förderrolle hierdurch auch hinsichtlich der Leistung der Bremsenergierückgewinnung variabel anpassen zu können.

Gemäß einer weiteren bevorzugten Ausführungsform ist vorgesehen, dass das erste oder zweite funktionelle Zusatzmodul als sensorische Funktion eine Drehpositionsbestimmung bereitstellt, indem das erste beziehungsweise zweite funktionelle Zusatzmodul ausgebildet ist, um eine Winkelposition zwischen der zweiten Achseinheit und dem Förderrollenrohr zu ermitteln. Gemäß dieser Ausführungsform wird durch das Zusatzmodul eine Drehpositionsbestimmung bereitgestellt, also es ermöglicht, die Winkelposition des Förderrollenrohrs in Bezug auf ein ortsfestes Koordinatensystem der ersten beziehungsweise zweiten Achseinheit zu bestimmen. Diese Drehpositionsbestimmung kann solcherart erfolgen, dass die Winkelposition des Förderrollenrohrs direkt erfasst wird, alternativ hierzu kann auch die Winkelposition des elektrischen Motors, also die Winkelposition des Rotors des elektrischen Motors, gegenüber der ersten beziehungsweise zweiten Achseinheit erfasst werden und aus dieser Motor-Winkelposition die Winkelposition des Förderrollenrohrs ermittelt werden, indem eine gegebenenfalls erfolgende Untersetzung der Rotation des Elektromotors durch ein Getriebe hierbei berücksichtigt wird. Unter einer Drehpositionsbestimmung ist hierbei auch eine Bestimmung der Drehwinkelgeschwindigkeit zu verstehen, insbesondere kann aus der Drehpositionsbestimmung durch Umrechnung die Drehwinkelgeschwindigkeit und gegebenenfalls auch die Drehwinkelbeschleunigung ermittelt werden.

Gemäß einer weiteren bevorzugten Ausführungsform ist vorgesehen, dass
- die erste Lagerungseinheit in einer ersten Endkappe angeordnet ist, die mittels der ersten Schnittstelle mit dem elektrischen Motor oder mittels der dritten Schnittstelle mit dem Getriebemodul gekoppelt ist, eine fünfte Schnittstelle zur Kopplung mit dem Förderrollenrohr und eine sechste Schnittstelle zur Kopplung mit der ersten Achseinheit aufweist, und
- die zweite Lagerungseinheit in einer zweiten Endkappe angeordnet ist, die eine siebte Schnittstelle zur Kopplung mit der zweiten Achseinheit und eine achte Schnittstelle zur Kopplung mit dem Förderrollenrohr aufweist.

Durch die Bereitstellung von einer ersten und zweiten Endkappe zur Aufnahme der ersten beziehungsweise der zweiten Lagerungseinheit wird ein fertigungstechnisch vorteilhafter Aufbau der Förderrollen erzielt, die mit dem erfindungsgemäßen Modulsystem hergestellt werden. Die Endkappe kann hierbei zum Beispiel aus einem Aluminium Druckguss, Edelstahl oder Kunststoff hergestellt sein und eine Dichtungswirkung bereitstellen.

Gemäß einer weiteren bevorzugten Ausführungsform ist vorgesehen, dass das Modulsystem eine erste Endkappe aus Aluminium Druckguss umfasst, die an einer fünften standardisierten Schnittstelle mit dem Förderrollenrohr verbunden ist und dort keine Dichtung aufweist die eine unerwünschte Kapillarwirkung zwischen Endkappe und Förderrollenrohr an der fünften Schnittstelle verhindern soll und weiterhin eine zweite Endkappe aus Edelstahl umfasst, die ebenfalls mittels der fünften Schnittstelle mit dem Förderrollenrohr verbunden ist und im Bereich dieser fünften Schnittstelle eine Dichtung (EHEDG-Dichtung) aufweist die eine unerwünschte Kapillarwirkung zwischen Endkappe und Förderrollenrohr verhindern soll.

Dabei ist es insbesondere bevorzugt, das Modulsystem fortzubilden durch
- eine erste und zweite Endkappe in einer ersten Version mit einer ersten Abdichtungswirkung gegen Flüssigkeiten, und
- eine erste und zweite Endkappe in einer zweiten Version mit einer zweiten, gegenüber der ersten Abdichtungswirkung erhöhten Abdichtungswirkung gegen Flüssigkeiten, umfasst.

Die erste und zweite Endkappe in der ersten Version können eine Abdichtungswirkung gegen Flüssigkeiten, die sich in der Förderrolle befinden, und eine Abdichtungswirkung gegen Medien oder Schmutz die von außen auf die Förderrolle einwirken, aufweisen. Eine erste und zweite Endkappe in einer zweiten Version mit einer demgegenüber erhöhten Abdichtungswirkung gegen Medien oder Schmutz die von außen auf die Förderrolle einwirken können alternativ dazu eingesetzt werden, ohne dass hierzu andere Anschlusschnittstellen benötigt sind oder hergestellt werden müssen. Gemäß dieser Ausführungsform kann aus dem Modulsystem eine Förderrolle mit einer hohen Schutzklasse (beispielsweise IP65 oder höher) hergestellt werden und für Einsatzzwecke in Umgebungen eingesetzt werden, die durch Feuchtigkeits- oder Schmutzeinflüsse einen solchen Schutz des Innenraums der Förderrolle erfordern. Zu diesem Zweck ist es üblich, ein Schutzelement vorzusehen, dass das eigentliche Dichtungselement wie z.B. einen Radialwellendichtring schützt. Typischerweise ist ein solches Schutzelement außenliegend zum Radialwellendichtring angeordnet und kann beispielsweise zwischen Förderrollenrohr oder einer in das Förderrollenrohr eingesetzten Endkappe und dem Achselement angeordnet sein. Das Schutzelement bildet eine vollständige oder teilweise äußere Abdichtung zwischen den relativ zueinander rotierenden Teilen der Förderrolle im Bereich des Achselements und schützt hierdurch die Dichtung gegen äußere Einflüsse. Zugleich kann aus dem Modulsystem durch Einsatz einer anderen Endkappe eine Förderrolle mit einer niedrigeren Schutzklasse (beispielsweise IP44 oder weniger) hergestellt werden, die ein solches Schutzelement nicht aufweist bzw. nicht aufnehmen kann. Hierdurch können aus dem Modulsystem ohne zusätzliche Fertigungskosten und Lagerhaltung angepasste Förderrollen hergestellt werden, die hinsichtlich ihrer Fertigungskosten an die jeweiligen Anforderungen angepasst sind.

Insbesondere ist es dabei bevorzugt, dass die erste und die zweite Endkappe identisch sind. Durch die Bereitstellung von identischen Endkappen wird die Lagerhaltung noch weiter vereinfacht, und die Fertigungskosten können durch Erzielen hoher Fertigungsstückzahlen für die Endkappen reduziert werden. Dabei ist zu verstehen, dass diese Endkappen dann in der motorbetriebenen Förderrolle vorzugsweise spiegelsymmetrisch zueinander eingebaut werden.

Ein weiterer Aspekt der Erfindung ist eine motorbetriebene Förderrolle, die aus einem Modulsystem der zuvor beschriebenen Bauweise hergestellt ist. Die motorbetriebene Förderrolle zeichnet sich durch entsprechend standardisierte Schnittstellen aus, also insbesondere eine entsprechend standardisierte erste, zweite, dritte, vierte und/oder fünfte bis achte Schnittstelle, die den Einsatz variabler Komponenten im Bereich des Zusatzmoduls, des elektrischen Motors, des Getriebes der Endkappen und/oder des Förderrollenrohres ermöglicht, ohne dass hierbei die Verbindungsweise der Komponenten angepasst oder geändert werden muss.

Ein noch weiterer Aspekt der Erfindung ist ein Verfahren zum Herstellen einer motorbetriebenen Förderrolle aus einem Modulsystem, mit den Schritten:
- Bereitstellen eines Förderrollenrohres,
- Einsetzen einer ersten Achseinheit in ein erstes Ende des Förderrollenrohres,
- Einsetzen einer zweiten Achseinheit in ein dem ersten Ende gegenüberliegendes zweites Ende des Förderrollenrohres,
- drehbares Lagern des Förderrollenrohrs um die erste und zweite Achseinheit mittels einer ersten Lagerungseinheit am ersten Ende und einer zweiten Lagerungseinheit am zweiten Ende,
- Anordnen eines elektrischen Motors in dem Förderrollenrohr, und mechanisches Koppeln des Motors über eine erste Schnittstelle mit dem Förderrollenrohr und über eine zweite Schnittstelle mit der zweiten Achseinheit zur Erzeugung eines Drehmoments zwischen dem Förderrollenrohr und der zweiten Achseinheit, dadurch gekennzeichnet, dass der elektrische Motor aus einem Modulsystem bereit gestellt wir, umfassend:
- einen Motor mit einer ersten Bauart, der über die erste Schnittstelle mit dem Förderrollenrohr und über die zweite Schnittstelle mit der zweiten Achseinheit gekoppelt wird, und
einen Motor mit einer von der ersten verschiedenen zweiten Bauart, der über die erste Schnittstelle mit dem Förderrollenrohr und über die zweite Schnittstelle mit der zweiten Achseinheit gekoppelt wird.

Das Verfahren kann fortgebildet werden, indem die erste Bauart ein Synchronmotor und die zweite Bauart ein Asynchronmotor ist, oder die erste Bauart ein Motor mit einer ersten Motorleistung und die zweite Bauart ein Motor einer von der ersten verschiedenen zweiten Motorleistung ist.

Das Verfahren kann fortgebildet werden, indem ein Getriebemodul mittels der ersten Schnittstelle mit dem elektrischen Motor verbunden wird, wobei das Getriebemodul das Drehmoment des elektrischen Motors untersetzt und auf das Förderrollenrohr überträgt, wobei das Getriebemodul ausgewählt wird aus einem ersten Getriebemodul mit einer ersten Untersetzung und einem zweiten Getriebemodul mit einer von der ersten verschiedenen zweiten Untersetzung.

Das Verfahren kann fortgebildet werden, indem das Getriebemodul ausgewählt wird aus einem ersten Getriebe mit Zahnrädern aus einem ersten Material und einem zweiten Getriebe mit Zahnrädern aus einem von dem ersten verschiedenen zweiten Material..

Das Verfahren kann fortgebildet werden, indem das Getriebemodul ausgewählt wird aus einem ersten Getriebe mit einem Planetengetriebe und einem zweiten Getriebe mit einer von dem Planetengetriebe verschiedenen Bauart, insbesondere einem Stirnradgetriebe..

Das Verfahren kann fortgebildet werden durch den Schritt
- Einsetzen eines modularen Übertragungselements zwischen den elektrischen Motor und die zweite Achseinheit und drehmomentfestes Koppeln des Übertragungselementes
   o mit dem elektrischen Motor über die zweite Schnittstelle und
   o mit der zweiten Achseinheit über eine vierte Schnittstelle,
wobei das modulare Übertragungselement aus einem Modulsystem ausgewählt wird, umfassend
- ein erstes funktionelles Zusatzmodul, welches mittels der zweiten Schnittstelle mit dem elektrischen Motor und mittels der vierten Schnittstelle mit der zweiten Achseinheit verbunden wird und eine elektromechanische, sensorische oder thermische Funktion bereitstellt, und
- ein zweites funktionelles Zusatzmodul, welches eine von dem ersten funktionellen Zusatzmodul verschiedene Funktion bereitstellt und anstelle des ersten funktionellen Zusatzmoduls als modulares Übertragungselement eingesetzt werden kann, indem es mittels der zweiten Schnittstelle mit dem elektrischen Motor und mittels der vierten Schnittstelle mit der zweiten Achseinheit verbunden wird.

Dabei kann bevorzugt vorgesehen sein, dass die zweite und vierte Schnittstelle identisch sind und das erste und das zweite funktionelle Zusatzmodul gemeinsam eingesetzt werden, indem das erste Zusatzmodul mittels der zweiten Schnittstelle mit dem elektrischen Motor und mittels dem daran ausgebildeten Abschnitt der vierten Schnittstelle mit dem an dem zweiten Zusatzmodul ausgebildeten Abschnitt der zweiten Schnittstelle des zweiten Zusatzmoduls verbunden wird und das zweite Zusatzmodul mittels der vierten Schnittstelle mit der zweiten Achseinheit verbunden wird.

Noch weiter kann bevorzugt vorgesehen sein, dass das Modulsystem weiterhin ein drehmomentübertragendes Zwischenstück ohne elektromechanische, sensorische oder thermische Funktion umfasst, das mittels der zweiten Schnittstelle mit dem elektrischen Motor und mittels der vierten Schnittstelle mit der zweiten Achseinheit verbunden ist.

Das Verfahren kann fortgebildet werden, indem als elektromechanische Funktion eine Bremsenergierückgewinnung bereitgestellt wird, indem das erste oder zweite funktionelle Zusatzmodul ein Drehmoment in elektrische Energie wandelt.

Das Verfahren kann fortgebildet werden, indem als sensorische Funktion eine Drehpositionsbestimmung bereitgestellt wird, indem das erste oder zweite funktionelle Zusatzmodul eine Winkelposition zwischen der zweiten Achseinheit und dem Förderrollenrohr ermittelt.

Das Verfahren kann fortgebildet werden, indem die erste Lagerungseinheit in einer ersten Endkappe angeordnet wird und die zweite Lagerungseinheit in einer zweiten Endkappe angeordnet wird.

Das Verfahren kann fortgebildet werden, indem
die erste und zweite Endkappe aus einem Modulsystem ausgewählt wird, umfassend
- eine erste Version mit einer ersten Abdichtungswirkung gegen Flüssigkeiten, und
- eine zweite Version mit einer zweiten, gegenüber der ersten Abdichtungswirkung erhöhten Abdichtungswirkung gegen Flüssigkeiten.

Insbesondere kann hierbei die Dichtungswirkung nach innen, die Dichtungswirkung nach außen und die verstärkte Dichtungswirkung gegenüber von außen einwirkenden Flüssigkeiten modulartig konfiguriert werden, wie zuvor beispielsweise in Form eines alternativen Einsatzes von Endkappen mit einer zusätzlichen Dichtung zum Förderrollenrohr oder von Endkappen mit einem zusätzlichen Schutzelement zum Schutz der Dichtung beschrieben.

Das Verfahren kann fortgebildet werden, indem eine zur ersten Endkappe identische zweite Endkappe eingebaut wird.

Es ist zu verstehen, dass sich das erfindungsgemäße Verfahren bevorzugt mit dem erfindungsgemäßen Modulsystem durchführen lässt. Die zuvor erläuterten Varianten, Vorteile und funktionellen Wirkungen des Modulsystems sind entsprechend analog auf die hierzu korrespondierenden Verfahrensschritte des Herstellungsverfahrens zu verstehen.

Eine bevorzugte Ausführungsform der Erfindung wird anhand der beiliegenden Figuren erläutert. Es zeigen:
- Fig. 1: eine längsgeschnittene Seitenansicht einer bevorzugten Ausführungsform einer Förderrolle aus dem erfindungsgemäßen Modulsystem,
- Fig. 2: eine längsgeschnittene Seitenansicht einer alternativen bevorzugten Ausführungsform einer Förderrolle aus dem erfindungsgemäßen Modulsystem, und
- Fig. 3: eine systematische Ansicht des erfindungsgemäßen Modulsystems

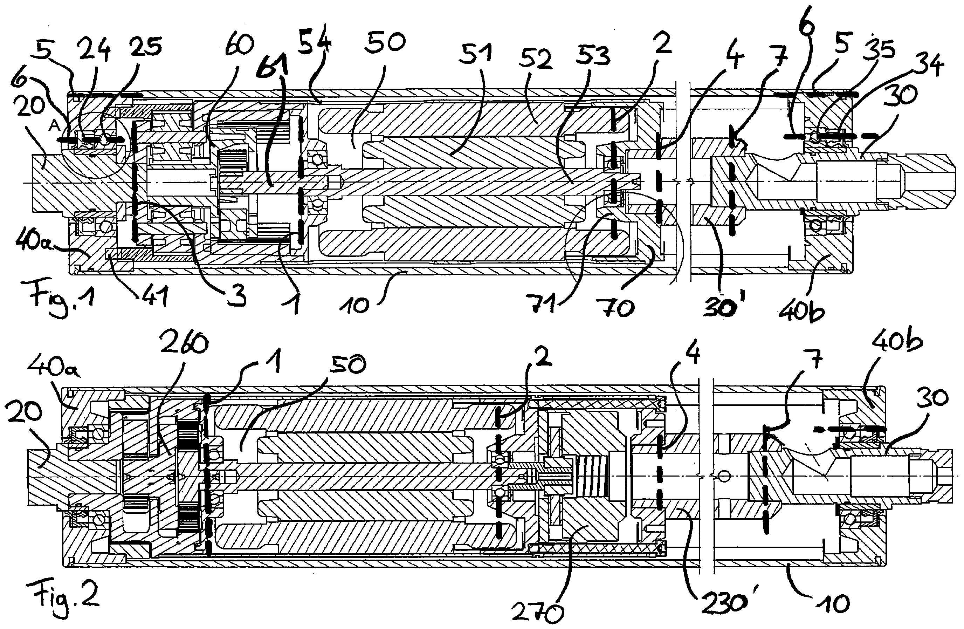

Fig. 1 zeigt eine motorbetriebene Förderrolle mit einem Förderrollenrohr 10, in dem eine erste Achseinheit 20 am in der Zeichnung linken Ende und eine zweite Achseinheit 30 am in der Zeichnung rechten Ende eingesetzt ist. Beide Achseinheiten erstrecken sich teilweise aus dem Förderrollenrohr hinaus und erlauben hiermit die Montage der Förderrolle in einem Gestell oder dergleichen.

Die erste Achseinheit 20 ist mittels einer Lagerungseinheit 25 in einer am linken Ende des Förderrollenrohrs angeordneten ersten Endkappe 40a gelagert. Die Endkappe 40a ist drehmomentfest mit dem Förderrollenrohr 10 verbunden. Zwischen Endkappe 40a und der ersten Achseinheit 20 ist außenliegend zur Lagerungseinheit 25 ein Radialwellendichtring 24 eingesetzt, der eine Abdichtung zwischen dem durch das Förderrollenrohr umschlossenen Innenraum und der Umgebung bewirkt.

Hierzu entsprechend ist die zweite Achseinheit 30 in einer am rechten Ende des Förderrollenrohrs drehmomentfest befestigten Endkappe 40b mittels einer Achslagerungseinheit 35 drehbar gelagert und wiederum mittels eines Radialwellendichtrings 34 auf dieser Seite eine Abdichtung zwischen Innenraum und Umgebung bewirkt.

Die Endkappen 40a, b sind baugleich. Die Endkappen bilden einerseits zu den darin gelagerten und abgedichteten Achseinheiten, andererseits zu dem Förderrollenrohr standardisierte Schnittstellen aus, die man als fünfte und sechste Schnittstellen 5 - 6 durchnummerieren kann, wie ersichtlich aus Fig. 1. Die Endkappen sind weiterhin so ausgebildet, dass eine dritte, drehmomentübertragende Schnittstelle 3 ausgebildet ist, um ein Drehmoment von einem Getriebe 60 aufzunehmen. Diese Funktion und Schnittstelle wird bei der in Fig. 1 abgebildeten Motorrolle nur durch die linke Endkappe 40a umgesetzt, die drehmomentübertragend zwischen Getriebe und Förderrollenrohr eingesetzt ist.

Das Getriebe 60 ist als mehrstufiges Planetenradgetriebe ausgeführt und mittels der dritten Schnittstelle 3 in die Förderrolle eingebunden. Die dritte Schnittstelle stellt einerseits eine Schnittstelle zur ersten Achseinheit dar, mit der der Planetenradträger drehmomentfest gekoppelt ist. Weiterhin umfasst die dritte Schnittstelle eine Anbindung an die erste Endkappe 40a zur drehmomentfesten Ankopplung des Hohlrades des Getriebes 60 an die erste Endkappe. Über diese Anbindung der dritten und fünften Schnittstelle wird ein Drehmoment von dem Getriebe auf das Förderrollenrohr übertragen.

Das Getriebe 60 ist weiterhin mittels einer ersten Schnittstelle 1 mit einem elektrischen Motor 50 gekoppelt. Der elektrische Motor 50 ist als bürstenloser Drehstrommotor ausgeführt und weist einen Rotor 51 und einen Stator 52 auf. Der Rotor 51 ist drehmomentfest mit einer Abtriebswelle 53 gekoppelt, die auf das Sonnenrad der ersten Getriebestufe des Planetenradgetriebes 60 wirkt. Die Abtriebswelle 53 ist drehbar in einem Zwischenflansch zwischen dem elektrischen Motor 50 und dem Getriebe 60 gelagert. Der Zwischenflansch ist wiederum drehmomentfest mit einem den elektrischen Motor 50 umhüllenden Motorgehäuse 54 und dem Getriebegehäuse des Planetengetriebes 60 gekoppelt. Die Verbindung zwischen diesem Zwischenflansch und dem Getriebe 60 einerseits und die Verbindung zwischen der Getriebewelle 61 und der Rotorwelle 51 andererseits stellt die erste Schnittstelle 1 dar, die im erfindungsgemäßen Modulsystem vereinheitlicht ist.

Auf der dieser ersten Schnittstelle 1 gegenüberliegenden Seite des elektrischen Motors ist der elektrische Motor mittels einer zweiten Schnittstelle 2 mit einem Zusatzmodul 70 verbunden. Dieses Zusatzmodul 70 wird durch einen zweiten Zwischenflansch 71 gebildet, der ein Kugellager aufnimmt, in dem die Rotorwelle 51 drehbar gelagert ist. Dieser zweite Zwischenflansch ist drehmomentfest mit einem drehmomentübertragenden Zwischenstück 30' in der in Fig. 1 gezeigten Ausführungsform verbunden. Dieses Zwischenstück 30' ist mit der zweiten Achseinheit 30 fest verbunden und unterbrochen dargestellt, und es ist zu verstehen, dass dieses Zwischenstück 30' in seiner Länge an die Länge der Förderrolle beziehungsweise an die Länge des Förderrollenrohrs 10 angepasst werden kann und folglich in verschiedenen Varianten zur Verfügung steht.

Das Zwischenstück 30' ist mittels einer siebten Schnittstelle 7 mit der zweiten Achseinheit 30 drehmomentfest verbunden. Diese siebte Schnittstelle wird durch eine kraft- und formschlüssige, gerändelte endseitige Einfassung der zweiten Achseinheit 30 in einem Innenraum des Zwischenstücks 30' bewirkt, kann aber auch rein formschlüssig, rein kraftschlüssig oder stoffschlüssig erfolgen.

Fig. 2 zeigt eine zweite Förderrolle, die aus dem erfindungsgemäßen Modulsystem hergestellt ist.

Wie aus Fig. 2 ersichtlich, ist die zweite Förderrolle hinsichtlich der Bauteile der Endkappen, der ersten Achseinheit, des elektrischen Motors und des Förderrollenrohres baugleich mit der in Fig. 1 dargestellten Ausführungsform. Die zweite Ausführungsform der Förderrolle aus dem erfindungsgemäßen Modulsystem unterscheidet sich jedoch von der in Fig. 1 gezeigten Förderrolle einerseits darin, dass ein anderes Getriebe 260 eingesetzt und mittels der ersten Schnittstelle 1 mit dem Motor 50 verbunden ist.

Weiterhin besteht zur Motorrolle nach Fig. 1 ein Unterschied darin, dass anstelle des Zusatzmoduls 70 ein Bremsmodul 270 zwischen die zweite und vierte Schnittstelle eingesetzt ist. Wie man erkennen kann, weist das Bremsmodul 270 die vierte Schnittstelle 4 auf, mittels welcher das Bremsmodul mit einem Zwischenstück 230', das kürzer ist als das Zwischenstück 30'der Motorrolle gemäß Figur 1, verbunden ist. Das Zwischenstück 230' ist mittels der siebten Schnittstelle 7 mit der zweiten Achseinheit 30 verbunden. Diese siebte Schnittstelle 7 entspricht der siebten Schnittstelle 7 des Verlängerungsstücks 30' gemäß Fig. 1, sodass eine Verbindung mit dem entsprechenden Gegenstück der siebten Schnittstelle an der zweiten Achseinheit 30 möglich ist. Das Bremsmodul 270 weist weiterhin eine entsprechend zweite Schnittstelle 2 auf, die die Kopplung zum elektrischen Motor herstellt. Diese zweite Schnittstelle 2 ist baugleich mit der zweiten Schnittstelle zwischen dem Zusatzmodul 70 und dem elektrischen Motor 50 der Motorrolle gemäß Fig. 1.

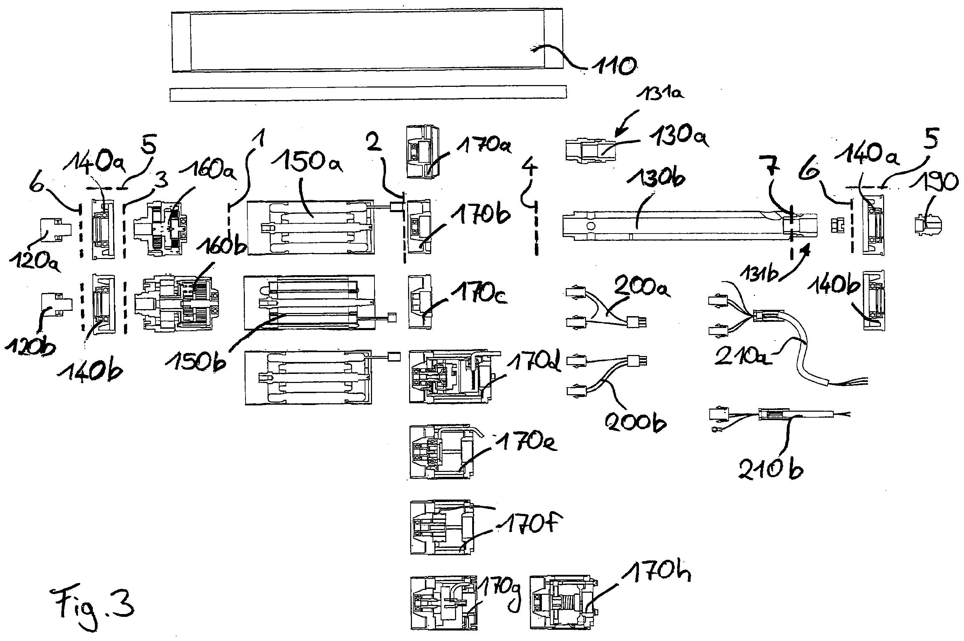

Figur 3 zeigt eine systematische Ansicht des erfindungsgemäßen Modulsystems. Das abgebildete Modulsystem umfasst grundsätzlich zwölf Modulkomponenten, die mit einander zu einer motorbetriebenen Förderrolle montiert werden können. Viele dieser Modulkomponenten sind in verschiedenen Varianten verfügbar und einsetzbar, sodass durch Auswahl einer Variante für diese Modulkomponente eine bestimmte Funktion der motorbetriebenen Förderrolle erreicht wird.

Grundsätzlich wird ein mit Öl gefülltes Förderrollenrohr 110 für jede Motorrolle eingesetzt. Das Förderrollenrohr wird auf eine individuelle Länge zugeschnitten und weist an seinen beiden Enden innenliegend jeweils eine standardisierte Schnittstelle 5 und 8 auf, mit der Endkappen 140a, b beidseits standardisiert in dem Förderrollenrohr befestigt werden können.

Die beidseits einzusetzenden Endkappen 140a, b sind in einer Variante aus rostfreiem Stahl 140a und einer Variante aus Aluminium 140b als jeweils auszuwählende Variante dieser Modulkomponente im Modulsystem enthalten. Hierdurch kann durch Auswahl der Edelstahlkappe eine Motorrolle für den Einsatz im Lebensmittelbereich montiert werden, für andere Bereiche ohne hohe hygienische Anforderungen kann die Endkappe aus Aluminium eingesetzt werden.

Durch die linke Endkappe 140a, b erstreckt sich eine erste Achseinheit, die wiederum in zwei Varianten 120a aus konventionellem Stahl und 120b aus rostfreiem Stahl ausgewählt werden kann. Durch die rechte Endkappe 140a, b erstreckt sich eine zweite Achseinheit 130a,b.

Die Endkappen 140a,b weisen eine sechste Schnittstelle 6 auf, an der die erste Achseinheit 120a, b bzw. die zweite Achseinheit 130a,b abgedichtet und wälzgelagert in der Endkappe gelagert ist. Weiterhin weisen die Endkappen 130 eine dritte Schnittstelle 3 auf, mit der eine Getriebekomponente 160 an der Endkappe drehmomentabgestützt ist. Die Getriebekomponente 160 weist hierzu eine entsprechend angepasste Schnittstelle 3 auf, die darüber hinaus eine zusätzliche Schnittstellenfunktion zur ersten Achseinheit 120a, b aufweist, um einen Drehmomentabstützung an dieser ersten Achseinheit zu bewirken. Hierdurch kann das Getriebe einerseits an der ersten Achseinheit, andererseits an der Endkappe drehmomentfest abgestützt werden und folglich eine Rotationsübertragung mit Abstützung aus einem Planetenradgetriebe erfolgen, indem das Hohlrad des Getriebes an der Endkappe und der Planetenradträger oder das Sonnenrad des Getriebes an der Achseinheit drehmomentfest abgestützt ist.

Mittels einer hierzu gegenüberliegenden ersten Schnittstelle 1 ist die Getriebekomponente an einer Motorkomponente 150a, b befestigt. Auch die Schnittstelle1 kann einerseits eine Zentrierung und drehmomentfeste Abstützung eines Getriebegehäuses am Motorgehäuse und andererseits eine drehmomentfeste Übertragung zwischen dem Planetenradträger oder dem Sonnenrad und der Abtriebswelle des elektrischen Motors bewirken. Die Motorkomponente bzw. der elektrische Motor ist in einer ersten Variante 150a mit einer Asynchronwicklung und einer zweiten Variante 150b mit einer Synchronwicklung im Modulsystem bereitgestellt.

Auf der der Schnittstelle 1 gegenüberliegenden Seite weist der elektrische Motor eine zweite Schnittstelle 2 auf. Diese zweite Schnittstelle 2 kann mit einem Funktionsmodul 170a-h drehmomentfest verbunden werden. Als Funktionsmodul sind acht verschiedene Varianten im erfindungsgemäßen Modulsystem vorgesehen:
- Eine erste Variante 170a weist eine zweite Schnittstelle zur Ankopplung an den elektrischen Motor auf und eine weitere, hierzu gegenüberliegende Schnittstelle, die mit einer Kurzversion der zweiten Achseinheit 130a drehmomentfest gekoppelt werden kann. Diese Variante 170a, 130a kommt zum Einsatz, wenn eine besonders kurze Motorrolle montiert werden soll und stellt keine Zusatzfunktion dar.
- Weiterhin ist ein Übertragungselement 170b als Variante enthalten, welches mittels der zweiten Schnittstelle 2 drehmomentfest mit dem elektrischen Motor und mittels einer vierten Schnittstelle 4 drehmomentfest mit einer zweiten Achseinheit 130b gekoppelt werden kann. Dieses Übertragungselement 170b bewirkt außer der Drehmomentübertragung und einer Lagerung der Abtriebswelle des Elektromotors keine Zusatzfunktionen und dient dazu, um Motorrollen unterschiedlicher Baulänge zu montieren.
- Weiterhin ist ein selektives Sperrmodul 170c vorgesehen, welches eine Rotation des Rotors des elektrischen Motors gegenüber dessen Stator in einer Drehrichtung freigibt und, in der hierzu entgegengesetzten Drehrichtung aber sperrt. Die Motorrolle kann bei Einsatz dieses Sperrmoduls nur in einer Richtung drehen und ein Antriebsdrehmoment übertragen, wohingegen in der anderen Richtung die Motorrolle blockiert ist und so z.B. ein Zurückbewegen des geförderten Produkts entgegen der Förderrichtung verhindert.
- Die weiteren Varianten 170d-g stellen unterschiedliche Sensoreinheiten dar, welche zur Drehwinkelmessung, Drehgeschwindigkeitsmessung in unterschiedlichen diskrementalen Auflösungen eingesetzt werden können.
- Eine achte Variante 170h ist ein funktionelles Bremsmodul, welches eine Brems- bzw. Sperrfunktion zwischen der Abtriebswelle des Motors und dessen Gehäuse bewirkt (also zwischen Rotor und Stator des elektrischen Motors) und hierdurch die Funktion beinhaltet, die Motorrolle in einer Winkelposition festhalten zu können.

Neben der kurzen ersten Achseinheit 130a, wie zuvor erläutert, ist eine weitere zweite Achseinheit 130b vorhanden, die zum Aufbau von Motorrollen unterschiedlicher Länge eingesetzt wird. Die zweite Achseinheit 130b wird mittels einer vierten Schnittstelle 4 mit dem Funktionsmodul 170a-h in einer der acht Varianten mechanisch gekoppelt. Am hierzu gegenüberliegenden Ende der zweiten Achseinheit ist eine Schnittstelle 6 vorgesehen, mit der die zweite Achseinheit in der rechten Endkappe 130 abgedichtet und gelagert ist.

Die zweite Achseinheit nimmt an ihrem außenliegenden Ende 131a, b ein Einsatzelement 190 auf. Zwischen dem Ende 131a, b und dem Einsatzelement 190 kann eine elektrische Steckerverbindung positioniert werden oder ein elektrisches Kabel der als Hohlachse ausgeführten Achseinheit zugeführt und/oder abgedichtet werden. Das Kabel wird nach außen geführt und dient ebenso wie die alternative Steckerverbindung dazu, um den elektrischen Motor 150 mit Strom und Steuersignalen zu versorgen.

Zur Herstellung dieser elektrischen Steckverbindungen sind vorkonfektionierte Varianten eines Kabelbaums 200a, b und 210a, b im Modulsystem enthalten, die entsprechend ausgewählt und für entsprechende Längen montiert werden können. Diese verbinden den elektrischen Motor und gegebenenfalls einen eingesetzten Encoder mit dem Einsatzelement 190 bzw. werden durch dieses hindurchgeführt.

## Patentansprüche

1. Modulsystem von motorbetriebenen Förderrollen, umfassend:
- ein Förderrollenrohr (10, 110),
- eine erste Achseneinheit (20, 130a), die in ein erstes Ende des Förderrollenrohres eingesetzt ist,
- eine zweite Achseneinheit (30, 130b), die in ein dem ersten Ende gegenüberliegendes zweites Ende des Förderrollenrohres eingesetzt ist,
- eine erste Lagerungseinheit (25) am ersten Ende und eine zweite Lagerungseinheit am zweiten Ende, um die das Förderrollenrohr um die erste und zweite Achseinheit entsprechend drehbar gelagert ist,
- einen in dem Förderrollenrohr angeordneten elektrischen Motor (50, 150), der zwischen die zweite Achseinheit und das Förderrollenrohr mechanisch gekoppelt ist zur Erzeugung eines Drehmoments zwischen dem Förderrollenrohr und der zweiten Achseinheit, wobei das Modulsystem als elektrischen Motor
- einen Motor mit einer ersten Bauart, der über eine erste Schnittstelle (1) mit dem Förderrollenrohr und über eine zweite Schnittstelle (2) mit der zweiten Achseinheit gekoppelt ist, und
- einen Motor mit einer von der ersten verschiedenen zweiten Bauart, der über die erste Schnittstelle mit dem Förderrollenrohr und über die zweite Schnittstelle mit der zweiten Achseinheit gekoppelt ist,
umfasst.

2. Modulsystem nach Anspruch 1, **dadurch gekennzeichnet, dass**
- die erste Bauart ein Synchronmotor und die zweite Bauart ein Asynchronmotor ist, oder
- die erste Bauart ein Motor mit einer ersten Motorleistung und die zweite Bauart ein Motor einer von der ersten verschiedenen zweiten Motorleistung ist.

3. Modulsystem nach Anspruch 1 oder 2, **dadurch gekennzeichnet, dass** der elektrische Motor r (50, 150) mittels der ersten Schnittstelle (1) mit einem Getriebemodul verbunden ist, welches das Drehmoment des elektrischen Motors untersetzt und über eine dritte Schnittstelle auf das Förderrollenrohr (10, 110) überträgt, wobei das Modulsystem als Getriebemodul ein erstes Getriebe (60) mit einer ersten Untersetzung und ein zweites, von dem ersten verschiedenes Getriebe, das eine von der ersten verschiedene zweite Untersetzung aufweist, umfasst wobei vorzugsweise das Modulsystem als Getriebemodul ein erstes Getriebe mit Zahnrädern aus einem ersten Material und ein zweites Getriebe mit Zahnrädern aus einem von dem ersten verschiedenen zweiten Material umfasst und/oder vorzugsweise **dadurch gekennzeichnet, dass** das Modulsystem als Getriebemodul ein erstes Getriebe mit einem Planetengetriebe und ein zweites Getriebe mit einer von dem Planetengetriebe verschiedenen Bauart, insbesondere einem Stirnradgetriebe, umfasst.

4. Modulsystem nach einem der vorhergehenden Ansprüche, **gekennzeichnet durch** ein modulares Übertragungselement, welches zwischen den elektrischen Motor (50, 150) und die zweite Achseinheit (30, 130b) eingesetzt ist, indem das modulare Übertragungselement mittels der zweiten Schnittstelle (2) mit dem elektrischen Motor und mittels einer vierten Schnittstelle (4) mit der zweiten Achseinheit verbunden ist, und über die zweite und vierte Schnittstelle das Drehmoment zwischen dem elektrischen Motor und der zweiten Achseinheit überträgt, wobei als modulares Übertragungselement
- ein erstes funktionelles Zusatzmodul, welches eine elektromechanische, sensorische oder thermische Funktion bereitstellt, und
- ein zweites funktionelles Zusatzmodul, welches anstelle des ersten funktionellen Zusatzmodul (70) in die Förderrolle eingesetzt werden kann und eine elektromechanische, sensorische oder thermische Funktion bereitstellt, die verschieden ist von der Funktion des ersten funktionellen Zusatzmoduls.

5. Modulsystem nach Anspruch 4, **gekennzeichnet durch** ein drehmomentübertragendes Zwischenstück (30', 230') ohne elektromechanische, sensorische oder thermische Funktion, das anstelle des ersten und zweiten funktionellen Zusatzmoduls (70) mittels der zweiten Schnittstelle mit dem elektrischen Motor (50, 150) und mittels der vierten Schnittstelle (4) mit der zweiten Achseinheit (30, 130b) verbunden ist,.

6. Modulsystem nach Anspruch 4 oder 5, **dadurch gekennzeichnet, dass** die zweite (2) und die vierte Schnittstelle (4) identisch sind und/oder vorzugsweise das erste oder zweite funktionelle Zusatzmodul (70) als elektromechanische Funktion eine Bremsenergierückgewinnung bereitstellt, indem das erste bzw. zweite funktionelle Zusatzmodul ausgebildet ist, um eine in der Rotation der Förderrolle gespeicherte kinetische Energie in elektrische Energie zu wandeln. und/oder vorzugsweise das erste oder zweite funktionelle Zusatzmodul als sensorische Funktion eine Drehpositionsbestimmung bereitstellt, indem das erste bzw. zweite funktionelle Zusatzmodul ausgebildet ist, um eine Winkelposition zwischen der zweiten Achseinheit (30, 130b) und dem Förderrollenrohr (10, 110) zu ermitteln.

7. Modulsystem nach einem der vorhergehenden Ansprüche, **dadurch gekennzeichnet, dass**
- die erste Lagerungseinheit in einer ersten Endkappe (130, 140a,b) angeordnet ist, die mittels der ersten Schnittstelle (1) mit dem elektrischen Motor (50, 150) oder mittels der dritten Schnittstelle (3) mit dem Getriebemodul gekoppelt ist, eine fünfte Schnittstelle (5) zur Kopplung mit dem Förderrollenrohr (10, 110) und eine sechste Schnittstelle (6) zur Kopplung mit der ersten Achseinheit (20, 130a) aufweist, und
- die zweite Lagerungseinheit in einer zweiten Endkappe (130, 140a,b) angeordnet ist, die eine siebte Schnittstelle (7) zur Kopplung mit der zweiten Achseinheit (30, 130b) und eine achte Schnittstelle (8) zur Kopplung mit dem Förderrollenrohr aufweist, wobei das Modulsystem
- eine erste und zweite Endkappe (130, 140a,b) in einer ersten Version mit einer ersten Abdichtungswirkung gegen Flüssigkeiten, und
- eine erste und zweite Endkappe (130, 140a,b) in einer zweiten Version mit einer zweiten, gegenüber der ersten Abdichtungswirkung erhöhten Abdichtungswirkung gegen Flüssigkeiten, umfasst.
und/oder vorzugsweise die erste und die zweite Endkappe identisch sind.

8. Motorbetriebene Förderrolle, hergestellt aus einem Modulsystem nach einem der vorhergehenden Ansprüche.

9. Verfahren zum Herstellen einer motorbetriebenen Förderrolle aus einem Modulsystem, mit den Schritten:
- Bereitstellen eines Förderrollenrohres (10, 110),
- Einsetzen einer ersten Achseinheit (20, 130a) in ein erstes Ende des Förderrollenrohres,
- Einsetzen einer zweiten Achseinheit (30, 130b) in ein dem ersten Ende gegenüberliegendes zweites Ende des Förderrollenrohres,
- drehbares Lagern des Förderrollenrohrs um die erste und zweite Achseinheit mittels einer ersten Lagerungseinheit am ersten Ende und einer zweiten Lagerungseinheit am zweiten Ende,
- Anordnen eines elektrischen Motors (50,150) in dem Förderrollenrohr, und mechanisches Koppeln des Motors über eine erste Schnittstelle (1) mit dem Förderrollenrohr und über eine zweite Schnittstelle (2) mit der zweiten Achseinheit zur Erzeugung eines Drehmoments zwischen dem Förderrollenrohr und der zweiten Achseinheit,
wobei der elektrische Motor (50, 150) aus einem Modulsystem bereit gestellt wir, umfassend:
- einen Motor mit einer ersten Bauart, der über die erste Schnittstelle mit dem Förderrollenrohr und über die zweite Schnittstelle mit der zweiten Achseinheit gekoppelt wird, und
- einen Motor mit einer von der ersten verschiedenen zweiten Bauart, der über die erste Schnittstelle mit dem Förderrollenrohr und über die zweite Schnittstelle mit der zweiten Achseinheit gekoppelt wird
- wobei vorzugsweisedie erste Bauart ein Synchronmotor und die zweite Bauart ein Asynchronmotor ist, oder
- die erste Bauart ein Motor mit einer ersten Motorleistung und die zweite Bauart ein Motor einer von der ersten verschiedenen zweiten Motorleistung ist.

10. Verfahren nach dem vorhergehenden Anspruch 9,
**dadurch gekennzeichnet, dass** ein Getriebemodul mittels der ersten Schnittstelle (1) mit dem elektrischen Motor (50, 150) verbunden wird, wobei das Getriebemodul das Drehmoment des elektrischen Motors untersetzt und auf das Förderrollenrohr (10, 110) überträgt, wobei das Getriebemodul ausgewählt wird aus einem ersten Getriebemodul mit einer ersten Untersetzung und einem zweiten Getriebemodul mit einer von der ersten verschiedenen zweiten Untersetzung
wobei vorzugsweise das Getriebemodul ausgewählt wird aus einem ersten Getriebe mit Zahnrädern aus einem ersten Material und einem zweiten Getriebe mit Zahnrädern aus einem von dem ersten verschiedenen zweiten Material und/oder vorzugsweise das Getriebemodul ausgewählt wird aus einem ersten Getriebe mit einem Planetengetriebe und einem zweiten Getriebe mit einer von dem Planetengetriebe verschiedenen Bauart, insbesondere einem Stirnradgetriebe.

11. Verfahren nach einem der vorhergehenden Ansprüche9-10, **gekennzeichnet durch** den Schritt
- Einsetzen eines modularen Übertragungselements zwischen den elektrischen Motor (50,150) und die zweite Achseinheit (30, 130b) und drehmomentfestes Koppeln des Übertragungselementes
o mit dem elektrischen Motor über die zweite Schnittstelle (2) und
o mit der zweiten Achseinheit über eine vierte Schnittstelle (4), wobei das modulare Übertragungselement aus einem Modulsystem ausgewählt wird, umfassend
- ein erstes funktionelles Zusatzmodul (70), welches mittels der zweiten Schnittstelle mit dem elektrischen Motor und mittels der vierten Schnittstelle mit der zweiten Achseinheit verbunden wird und eine elektromechanische, sensorische oder thermische Funktion bereitstellt, und
- ein zweites funktionelles Zusatzmodul (70), welches eine von dem ersten funktionellen Zusatzmodul verschiedene Funktion bereitstellt und anstelle des ersten funktionellen Zusatzmoduls als modulares Übertragungselement eingesetzt werden kann, indem es mittels der zweiten Schnittstelle mit dem elektrischen Motor und mittels der vierten Schnittstelle mit der zweiten Achseinheit verbunden wird
wobei vorzugsweise die zweite und vierte Schnittstelle identisch sind und das erste und das zweite funktionelle Zusatzmodul gemeinsam eingesetzt werden, indem das erste Zusatzmodul mittels der zweiten Schnittstelle mit dem elektrischen Motor und mittels dem daran ausgebildeten Abschnitt der vierten Schnittstelle mit dem an dem zweiten Zusatzmodul ausgebildeten Abschnitt der zweiten Schnittstelle des zweiten Zusatzmoduls verbunden wird und das zweite Zusatzmodul mittels der vierten Schnittstelle mit der zweiten Achseinheit verbunden wird.

12. Verfahren nach Anspruch 11,
- **dadurch gekennzeichnet, dass** das Modulsystem weiterhin ein drehmomentübertragendes Zwischenstück (30', 230') ohne elektromechanische, sensorische oder thermische Funktion umfasst, das mittels der zweiten Schnittstelle (2) mit dem elektrischen Motor (50, 150) und mittels der vierten Schnittstelle (4) mit der zweiten Achseinheit (30, 130b) verbunden ist.

13. Verfahren nach einem der vorhergehenden Ansprüche 11-12, **dadurch gekennzeichnet, dass** als elektromechanische Funktion eine Bremsenergierückgewinnung bereitgestellt wird, indem das erste oder zweite funktionelle Zusatzmodul (70) ein Drehmoment in elektrische Energie wandelt.

14. Verfahren nach einem der vorhergehenden Ansprüche 11-12, **dadurch gekennzeichnet, dass** als sensorische Funktion eine Drehpositionsbestimmung bereitgestellt wird, indem das erste oder zweite funktionelle Zusatzmodul (70) eine Winkelposition zwischen der zweiten Achseinheit (30, 130b) und dem Förderrollenrohr ermittelt.

15. Verfahren nach einem der vorhergehenden Ansprüche 9-14, **dadurch gekennzeichnet, dass** die erste Lagerungseinheit in einer ersten Endkappe (130, 140a,b) angeordnet wird und die zweite Lagerungseinheit in einer zweiten Endkappe (130, 140a,b) angeordnet wird wobei vorzugsweise die erste und zweite Endkappe aus einem Modulsystem ausgewählt wird, umfassend
- eine erste Version mit einer ersten Abdichtungswirkung gegen Flüssigkeiten, und
- eine zweite Version mit einer zweiten, gegenüber der ersten Abdichtungswirkung erhöhten Abdichtungswirkung gegen Flüssigkeiten und/oder vorzugsweise die erste und die zweite Endkappe identisch sind.

## Claims

1. A modular system of motorized conveyor rollers, comprising:
- a conveyor roller tube (10, 110),
- a first axle unit (20, 130a), which is integrated in a first end of the conveyor roller tube,
- a second axle unit (30, 130b), which is integrated in a second end of the conveyor roller tube opposite the first end,
- a first bearing unit (25) on the first end and a second bearing unit on the second end, about which the conveyor roller tube is mounted rotatably about the first and second axle units, respectively,
- an electric motor (50, 150) arranged in the conveyor roller tube and mechanically coupled between the second axle unit und the conveyor roller tube for generating a torque between the conveyor roller tube and the second axle unit,
wherein the modular system comprises, as an electric motor,
- a motor of a first design, which is coupled to the conveyor roller tube via a first interface (1) and to the second axle unit via a second interface (2), and
- a motor of a second design different from the first design, which is coupled to the conveyor roller tube via the first interface and to the second axle unit via the second interface.

2. The modular system as claimed in claim 1,
**characterized in that**
- the first design is a synchronous motor and the second design is an asynchronous motor, or
- the first design is a motor having a first motor output and the second design is a motor having a second motor output that is different from the first motor output.

3. The modular system as claimed in claim 1 or 2,
**characterized in that** the electric motor (50, 150) is connected via the first interface (1) to a transmission module, which reduces the torque of the electric motor and transfers it via a third interface to the conveyor roller tube (10, 110), wherein the modular system comprises, as a transmission module, a first transmission (60) having a first reduction ratio and a second transmission different from the first transmission, which has a second reduction ratio different from the first reduction ratio preferably wherein the modular system comprises, as a transmission module, a first transmission having gears of a first material and a second transmission having gears of a second material different from the first material,
and/or preferably **characterized in that** the modular system comprises, as a transmission module, a first transmission having a planetary gear system and a second transmission having a design different from the planetary gear system, in particular a spur gear system.

4. The modular system as claimed in one of the preceding claims, **characterized by** a modular transfer element, which is integrated between the electric motor (50, 150) and the second axle unit (30, 130b) in that the modular transfer element is connected to the electric motor via the second interface (2) and to the second axle unit via a fourth interface (4) and transfers the torque between the electric motor and the second axle element via the second and fourth interfaces, wherein as a modular transfer element
- a first functional add-on module (70), which performs an electromechanical, sensing or thermal function, and
- a second functional add-on module, which can be integrated in the conveyor roller instead of the first functional add-on module and which performs an electromechanical, sensing or thermal function that is different from the function of the first functional add-on module.

5. The modular system as claimed in claim 4,
**characterized by** a torque-transferring intermediate piece(30', 230') without any electromechanical, sensing or thermal function, which is connected instead of the first and second functional add-on modules (70) to the electric motor (50, 150) by means of the second interface and to the second axle unit (30, 130b) by means of the fourth interface (4).

6. The modular system as claimed in claim 4 or 5,
**characterized in that** the second (2) and the fourth interfaces (4) are identical,
and/or preferably the first or second functional add-on module performs regenerative braking as an electromechanical function **in that** the first or second functional add-on module is configured to convert kinetic energy stored in the rotation of the conveyor roller into electrical energy,
and/or preferably the first or second functional add-on module performs a rotational position determination as a sensing function **in that** the first or second functional add-on module is configured to calculate an angular position between the second axle unit (0, 130b) and the conveyor roller tube (10, 110).

7. The modular system as claimed in one of the preceding claims, **characterized in that**
- the first bearing unit is arranged in a first end cap (130, 140b), which is coupled to the electric motor (50, 150) by means of the first interface (1) or to the transmission module by means of the third interface (3), has a fifth interface (5) for coupling to the conveyor roller tube (10, 110) and a sixth interface (6) for coupling to the first axle unit (20, 130a), and
- the second bearing unit is arranged in a second end cap (130, 140a,b), which has a seventh interface (7) for coupling to the second axle unit (30, 130b) and an eighth interface (8) for coupling to the conveyor roller tube, wherein the modular system comprises
a first and second end cap (130, 140a,b) in a first version having a first sealing action against fluids, and
- a first and second end cap (130, 140a,b) in a second version having a second sealing action against fluids that is stronger than the first sealing action,
and/or wherein preferably the first and the second end caps are identical.

8. A motorized conveyor roller produced from a modular system as claimed in one of the preceding claims.

9. A method for producing a motorized conveyor roller from a modular system, with the steps:
- providing a conveyor roller tube (10, 110),
- integrating a first axle unit (20, 130a) in a first end of the conveyor roller tube,
- integrating a second axle unit (30, 130b) in a second end, opposite the first end, of the conveyor roller tube,
- mounting the conveyor roller tube so that it is capable of rotation about the first and second axle units by means of a first bearing unit on the first end and a second bearing unit on the second end,
- arranging an electric motor (50, 150) in the conveyor roller tube and mechanically coupling the motor to the conveyor roller tube via a first interface (1) and to the second axle unit via a second interface (2) in order to generate a torque between the conveyor roller tube and the second axle unit,
wherein the electric motor is provided from a modular system comprising:
- a motor with a first design, which is coupled to the conveyor roller tube via the first interface and to the second axle unit via the second interface, and
- a motor with a second design different from the first design, which is coupled to the conveyor roller tube via the first interface and to the second axle unit via the second interface,
wherein preferably
- the first design is a synchronous motor and the second design is an asynchronous motor, or
the first design is a motor having a first motor output and the second design is a motor having a second motor output different from the first motor output.

10. The method as claimed the preceding claim 9,
**characterized in that** a transmission module is connected to the electric motor (50, 150) by means of the first interface (1), wherein the transmission module reduces the torque of the electric motor and transfers it to the conveyor roller tube (10, 110), wherein the transmission module is selected from a first transmission module having a first reduction ratio and a second transmission module having a second reduction ratio different from the first reduction ratio,
wherein preferably the transmission module is selected from a first transmission having gears made of a first material and a second transmission having gears made of a second material different from the first material
and/or preferably the transmission module is selected from a first transmission having a planetary gear system and a second transmission having a design different from the planetary gear system, in particular a spur gear system.

11. The method as claimed in one of the preceding claims 9-10, **characterized by** the step of
integration of a modular transfer element between the electric motor (50, 150) and the second axle unit (30, 130b) and torque-proof coupling of the transfer element
- to the electric motor via the second interface (2) and
- to the second axle unit via a fourth interface (4),
wherein the modular transfer element is selected from a modular system comprising
- a first functional add-on module (70), which is connected to the electric motor by means of the second interface and to the second axle unit by means of the fourth interface and performs an electromechanical, sensing or thermal function, and
- a second functional add-on module (70), which performs a function different from the first functional add-on module and can be used as a modular transfer element instead of the first functional add-on module by connecting it to the electric motor by means of the second interface and to the second axle unit by means of the fourth interface,
wherein preferably the second and the fourth interfaces are identical and the first and the second functional add-on modules are jointly integrated in that the first add-on module is connected by means of the second interface to the electric motor and connected by means of the section of the fourth interface formed thereon to the section of the second interface of the second add-on module formed on the second add-on module, and the second add-on module is connected by means of the fourth interface to the second axle unit.

12. The method as claimed in claim 11,
**characterized in that** the modular system further comprises a torque-transferring intermediate piece without any electromechanical, sensing or thermal function, which is connected to the electric motor by means of the second interface (2) and to the second axle unit (30, 130b) by means of the fourth interface (4).

13. The method as claimed in one of the preceding claims 11-12, **characterized in that** regenerative braking is performed as an electromechanical function by the first or second functional add-on module (70) converting a torque into electrical energy.

14. The method as claimed in one of the preceding claims 11-12, **characterized in that** a rotational position determination is performed as a sensing function by the first or second functional add-on module (70) calculating an angular position between the second axle unit (30, 130b) and the conveyor roller tube.

15. The method as claimed in one of the preceding claims 9-14, **characterized in that** the first bearing unit is arranged in a first end cap (40, 140a,b) and the second bearing unit is arranged in a second end cap (40, 140a,b),
wherein preferably the first and the second end caps are selected from a modular system comprising
- a first version having a first sealing action against fluids, and
- a second version having a second sealing action against fluids that is stronger than the first sealing action,
and/or preferably the first and the second end caps are identical.

## Revendications

1. Système modulaire composé de rouleaux de transport à moteur, comprenant :
- un tube de rouleau de transport (10, 110),
- une première unité d'axe (20, 130a) qui est insérée dans une première extrémité du tube de rouleau de transport,
- une deuxième unité d'axe (30, 130b) qui est insérée dans une deuxième extrémité, opposée à la première extrémité, du tube de rouleau de transport,
- une première unité de palier (25) à la première extrémité et une deuxième unité de palier à la deuxième extrémité autour desquelles le tube de rouleau de transport est monté rotatif respectivement autour de la première et de la deuxième unité d'axe,
- un moteur électrique (50, 150) disposé dans le tube de rouleau de transport qui est couplé mécaniquement entre la deuxième unité d'axe et le tube de rouleau de transport afin de produire un couple entre le tube de rouleau de transport et la deuxième unité d'axe,
dans lequel le système modulaire comprend comme moteur électrique
- un moteur d'un premier type qui est couplé avec le tube de rouleau de transport par l'intermédiaire d'une première interface (1) et est couplé avec la deuxième unité d'axe par l'intermédiaire d'une deuxième interface (2), et
- un moteur d'un deuxième type, différent du premier type, qui est couplé avec le tube de rouleau de transport par l'intermédiaire de la première interface et est couplé avec la deuxième unité d'axe par l'intermédiaire de la deuxième interface.

2. Système modulaire selon la revendication 1, **caractérisé en ce que**
- le premier type est un moteur synchrone et le deuxième type est un moteur asynchrone, ou
- le premier type est un moteur ayant une première puissance de moteur et le deuxième type est un moteur ayant une deuxième puissance de moteur différente de la première puissance de moteur.

3. Système modulaire selon la revendication 1 ou 2, **caractérisé en ce que** le moteur électrique (50, 150) est relié au moyen de la première interface (1) à un module d'engrenage qui démultiplie le couple du moteur électrique et le transmet au tube de rouleau de transport (10, 110) par l'intermédiaire d'une troisième interface, le système modulaire comprenant comme module d'engrenage un premier engrenage (60) ayant une première démultiplication et un deuxième engrenage différent du premier engrenage qui présente une deuxième démultiplication différente de la première démultiplication,
dans lequel, de préférence le système modulaire comprend comme module d'engrenage un premier engrenage pourvu de roues dentées d'un premier matériau et un deuxième engrenage pourvu de roues dentées d'un deuxième matériau différent du premier matériau,
et/ou de préférence **caractérisé en ce que** le système modulaire comprend comme module d'engrenage un premier engrenage pourvu d'un engrenage planétaire et un deuxième engrenage pourvu d'un type différent de l'engrenage planétaire, en particulier d'un réducteur à engrenage droit.

4. Système modulaire selon l'une quelconque des revendications précédentes, **caractérisé par** un élément de transmission modulaire qui est inséré entre le moteur électrique (50, 150) et la deuxième unité d'axe (30, 130b) en ce que l'élément de transmission modulaire est relié au moteur électrique au moyen de la deuxième interface (2) et à la deuxième unité d'axe au moyen d'une quatrième interface (4), et transmet par l'intermédiaire de la deuxième et de la quatrième interface le couple entre le moteur électrique et la deuxième unité d'axe, dans lequel, comme élément de transmission modulaire,
- un premier module fonctionnel supplémentaire qui fournit une fonction électromécanique, sensorielle ou thermique, et
- un deuxième module fonctionnel supplémentaire qui peut être inséré au lieu du premier module fonctionnel supplémentaire (70) dans le rouleau de transport et fournit une fonction électromécanique, sensorielle ou thermique qui est différente de la fonction du premier module fonctionnel supplémentaire.

5. Système modulaire selon la revendication 4, **caractérisé par** une pièce intermédiaire de transmission de couple (30', 230'), sans fonction électromécanique, sensorielle ou thermique, qui est relié au moteur électrique (50, 150) au lieu du premier et du deuxième module fonctionnel supplémentaire (70) au moyen de la deuxième interface et à la deuxième unité d'axe (30, 130b) au moyen de la quatrième interface (4).

6. Système modulaire selon la revendication 4 ou 5, **caractérisé en ce que** la deuxième (2) et la quatrième interface (4) sont identiques,
et/ou de préférence le premier ou le deuxième module fonctionnel supplémentaire (70) fournit comme fonction électromécanique une récupération d'énergie de freinage **en ce que** le premier ou le deuxième module supplémentaire fonctionnel est réalisé pour convertir en énergie électrique une énergie cinétique stockée dans la rotation du rouleau de transport,
et/ou de préférence le premier ou le deuxième module fonctionnel supplémentaire fournit comme fonction sensorielle une détermination de position de rotation **en ce que** le premier ou le deuxième module fonctionnel supplémentaire est réalisé pour déterminer une position angulaire entre la deuxième unité d'axe (30, 130b) et le tube de rouleau de transport (10, 110).

7. Système modulaire selon l'une quelconque des revendications précédentes, **caractérisé en ce que**
- la première unité de palier est disposée dans un premier embout (130, 140a,b) qui est couplé avec le moteur électrique (50, 150) au moyen de la première interface (1) ou avec le module d'engrenage au moyen de la troisième interface (3), présente une cinquième interface (5) servant au couplage avec le tube de rouleau de transport (10, 110) et une sixième interface (6) servant au couplage avec la première unité d'axe (20, 130a), et
- la deuxième unité de palier est disposée dans un deuxième embout (130, 140a,b) qui présente une septième interface (7) servant au couplage avec la deuxième unité d'axe (30, 130b) et une huitième interface (8) servant au couplage avec le tube de rouleau de transport,
le système modulaire comprenant
- un premier et un deuxième embout (130, 140a,b) d'une première version ayant un premier effet d'étanchéité aux liquides, et
- un premier et un deuxième embout (130, 140a,b) d'une deuxième version ayant un deuxième effet d'étanchéité aux liquides, augmenté par rapport au premier effet d'étanchéité,
et/ou de préférence le premier et le deuxième embout sont identiques.

8. Rouleau de transport à moteur, fabriqué à partir d'un système modulaire selon l'une quelconque des revendications précédentes.

9. Procédé de fabrication d'un rouleau de transport à moteur à partir d'un système modulaire, comprenant les étapes consistant à :
- fournir un tube de rouleau de transport (10, 110),
- insérer une première unité d'axe (20, 130a) dans une première extrémité du tube de rouleau de transport,
- insérer une deuxième unité d'axe (30, 130b) dans une deuxième extrémité, opposée à la première extrémité, du tube de rouleau de transport,
- monter rotatif le rouleau de transport autour de la première et de la deuxième unité d'axe au moyen d'une première unité de palier à la première extrémité et d'une deuxième unité de palier à la deuxième extrémité,
- disposer un moteur électrique (50, 150) dans le tube de rouleau de transport, et coupler mécaniquement le moteur avec le tube de rouleau de transport par l'intermédiaire d'une première interface (1) et avec la deuxième unité d'axe par l'intermédiaire d'une deuxième interface (2) afin de produire un couple entre le tube de rouleau de transport et la deuxième unité d'axe,
dans lequel le moteur électrique (50, 150) est fourni à partir d'un système modulaire, comprenant :
- un moteur d'un premier type qui est couplé avec le tube de rouleau de transport par l'intermédiaire d'une première interface et avec la deuxième unité d'axe par l'intermédiaire d'une deuxième interface, et
- un moteur d'un deuxième type, différent du premier type, qui est couplé avec le tube de rouleau de transport par l'intermédiaire de la première interface et avec la deuxième unité d'axe par l'intermédiaire de la deuxième interface,
- de préférence, le premier type étant un moteur synchrone et le deuxième type étant un moteur asynchrone, ou
- le premier type étant un moteur ayant une première puissance de moteur et le deuxième type étant un moteur ayant une deuxième puissance de moteur différente de la première puissance de moteur.

10. Procédé selon la revendication précédente 9, **caractérisé en ce qu'**un module d'engrenage est relié au moteur électrique (50, 150) au moyen de la première interface (1), le module d'engrenage démultipliant le couple du moteur électrique et le transmettant au tube de rouleau de transport (10, 110), le module d'engrenage étant sélectionné parmi un premier module d'engrenage ayant une première démultiplication et un deuxième module d'engrenage ayant une deuxième démultiplication différente de la première démultiplication,
de préférence le module d'engrenage étant sélectionné parmi un premier engrenage pourvu de roues dentées d'un premier matériau et un deuxième engrenage pourvu de roues dentées d'un deuxième matériau différent du premier matériau,
et/ou de préférence, le module d'engrenage étant sélectionné parmi un premier engrenage pourvu d'un engrenage planétaire et un deuxième engrenage pourvu d'un type différent de l'engrenage planétaire, en particulier d'un réducteur à engrenage droit.

11. Procédé selon l'une quelconque des revendications précédentes 9 à 10, **caractérisé par** l'étape consistant à
- insérer un élément de transmission modulaire entre le moteur électrique (50, 150) et la deuxième unité d'axe (30, 130b), et coupler de manière verrouillée en couple l'élément de transmission
o avec le moteur électrique par l'intermédiaire de la deuxième interface (2), et
o avec la deuxième unité d'axe par l'intermédiaire d'une quatrième interface (4),
l'élément de transmission modulaire étant sélectionné à partir d'un système modulaire comprenant
- un premier module fonctionnel supplémentaire (70) qui est relié au moteur électrique au moyen de la deuxième interface et à la deuxième unité d'axe au moyen de la quatrième interface et fournit une fonction électromécanique, sensorielle ou thermique, et
- un deuxième module fonctionnel supplémentaire (70) qui fournit une fonction différente du premier module fonctionnel supplémentaire et peut être inséré au lieu du premier module fonctionnel supplémentaire comme élément de transmission modulaire en ce qu'il est relié au moteur électrique au moyen de la deuxième interface et à la deuxième unité d'axe au moyen de la quatrième interface,
dans lequel de préférence, la deuxième et la quatrième interface sont identiques, et le premier et le deuxième module fonctionnel supplémentaire sont insérés ensemble en ce que le premier module supplémentaire est relié au moyen de la deuxième interface au moteur électrique, et au moyen de la partie de la quatrième interface, réalisée sur celui-ci, à la partie de la deuxième interface du deuxième module supplémentaire, réalisée sur le deuxième module supplémentaire, et le deuxième module supplémentaire est relié au moyen de la quatrième interface à la deuxième unité d'axe.

12. Procédé selon la revendication 11,
- **caractérisé en ce que** le système modulaire comprend en outre une pièce intermédiaire de transmission de couple (30', 230'), sans fonction électromécanique, sensorielle ou thermique, qui est relié au moteur électrique (50, 150) au moyen de la deuxième interface (2) et à la deuxième unité d'axe (30, 130b) au moyen de la quatrième interface (4).

13. Procédé selon l'une quelconque des revendications précédentes 11 à 12, **caractérisé en ce que** comme fonction électromécanique, une récupération d'énergie de freinage est fournie **en ce que** le premier ou le deuxième module fonctionnel supplémentaire (70) convertit un couple en énergie électrique.

14. Procédé selon l'une quelconque des revendications précédentes 11 à 12, **caractérisé en ce que** comme fonction sensorielle, une détermination de position de rotation est fournie **en ce que** le premier ou le deuxième module fonctionnel supplémentaire (70) détermine une position angulaire entre la deuxième unité d'axe (30, 130b) et le tube de rouleau de transport.

15. Procédé selon l'une quelconque des revendications précédentes 9 à 14, **caractérisé en ce que** la première unité de palier est disposée dans un premier embout (130, 140a,b) et la deuxième unité de palier est disposée dans un deuxième embout (130, 140a,b),
de préférence le premier et le deuxième embout étant sélectionnés à partir d'un système modulaire, comprenant
- une première version ayant un premier effet d'étanchéité aux liquides, et
- une deuxième version ayant un deuxième effet d'étanchéité aux liquides, augmenté par rapport au premier effet d'étanchéité, et/ou de préférence le premier et le deuxième embout étant identiques.
